# EUROPEAN PATENT APPLICATION

(11) **EP 4 507 170 A1**
(43) Date of publication of application: **12.02.2025**
(21) Application number: 23860076.1
(22) Date of filing: 17.08.2023
(51) Int. Cl.: H02K 3/28

(54) **STATOR**

(30) Priority: 30.08.2022 JP 2022137339
(71) Applicant: AISIN CORPORATION, Kariya-shi, Aichi 448-8650 (JP)
(72) Inventor: TAKEMI, Tomohiko, Kariya-shi, Aichi 448-8650 (JP); KOGA, Kiyotaka, Kariya-shi, Aichi 448-8650 (JP); KOBUCHI, Takahiro, Kariya-shi, Aichi 448-8650 (JP); MARUI, Daisuke, Kariya-shi, Aichi 448-8650 (JP)
(74) Representative: Kramer Barske Schmidtchen Patentanwälte PartG mbB
(86) International application number: PCT/JP2023/029758
(87) International publication number: WO 2024/048313

(57) **Abstract**

In this stator, a coil unit is wave-wound stepwise and sequentially along one side in a circumferential direction from an end of another side to an end of one side in a radial direction by the wave-wound coil parts connected to each other, is changed in direction in the circumferential direction from one to another by a second coil end portion, and then is wave-wound sequentially along another side in the circumferential direction from an end of one side to an end of another side in the radial direction.

## Description

### TECHNICAL FIELD

The present invention relates to a stator.

### BACKGROUND ART

Conventionally, a stator having a stator core provided with a plurality of slots is known. Such a stator is described, for example, in WO 2022/071029 A.

The stator described in WO 2022/071029 A includes a stator core provided with a plurality of slots and coil units attached to the stator core. The coil units include a conductor connection body. The conductor connection body has a plurality of straight parts passing through the slots and a bent part provided on one side in an axial direction of the stator core. In the coil units, two straight parts are connected to each other via a bent part. Furthermore, in the stator described in WO 2022/071029 A, the straight parts of the coil units are disposed in four layers arranged in a radial direction in each of the plurality of slots. That is, in one slot, four straight parts pass side by side in the radial direction. Then, the conductor connection body goes around the stator core so that the straight parts alternately pass through adjacent layers. Specifically, the conductor connection body goes around the stator core in a zigzag manner along a circumferential direction such that the straight parts pass through an innermost layer and a second innermost layer alternately, and then the layers through which the straight parts pass are switched at a midpoint. Then, the conductor connection body goes around the stator core in a zigzag manner along the circumferential direction such that the straight parts pass through a third innermost layer and an outermost layer alternately.

### CITATIONS LIST

### PATENT LITERATURE

Patent Literature 1: WO 2022/071029 A

### SUMMARY OF INVENTION

### TECHNICAL PROBLEMS

However, in the stator described in WO 2022/071029 A, two layers through which the straight parts alternately pass are switched at a midpoint by the second innermost layer being connected to the third innermost layer such that the straight parts pass through the innermost layer and the second innermost layer alternately, and then pass through the third innermost layer and the outermost layer alternately. Therefore, the straight parts need to extend across a conductor of another coil end portion at a portion where the second innermost layer is connected to the third innermost layer so that two layers through which the straight parts alternately pass are switched. Therefore, the stator core is large in size in the axial direction, at a portion at a midpoint of each slot of the coil end portion in the radial direction. Because the stator is large in size as described above, it is desired to reduce a size of the coil units of the stator core in the axial direction.

The present invention has been made to solve the above-described problem, and to provide a stator with which a stator core having coil units small in size in the axial direction can be used.

### SOLUTIONS TO PROBLEMS

**In** order to achieve the above, a stator according to an aspect of the present invention includes a stator core including a plurality of slots extending in an axial direction, and a coil unit around which conductive wire is wave-wound, the coil unit being disposed in each of the plurality of slots, in which the coil unit includes a plurality of slot housed portions housed in each of the plurality of slots, in a state of being disposed side by side along a radial direction of the stator core, a first coil end portion connecting a pair each of the slot housed portions different from each other in position in the radial direction, among the plurality of slot housed portions housed in the slots different from each other, and a second coil end portion connecting a pair each of the slot housed portions common to each other in position in the radial direction, among the plurality of slot housed portions housed in the slots different from each other, the first coil end portion forms a wave-wound coil part wave-wound around the stator core with the slot housed portions along a circumferential direction by connecting a pair each of the slot housed portions such that positions in the radial direction of the slot housed portions connected are changed stepwise and sequentially toward one side in the radial direction from an end of another side to an end of one side in the radial direction, the second coil end portion connects at least a pair of the wave-wound coil parts wave-wound stepwise and sequentially, by connecting a pair each of the slot housed portions, and the coil unit is wave-wound stepwise and sequentially along one side in the circumferential direction from an end of another side to an end of one side in the radial direction by the wave-wound coil parts connected to each other, is changed in direction in the circumferential direction from one to another by the second coil end portion, and then is wave-wound sequentially along another side in the circumferential direction from an end of one side to an end of another side in the radial direction. Note that the term "connection" as used herein is described as a broad concept including not only to join different conductor members to connect them, but also a state where the conductor members are linked to be connected as one conductor.

**In** the stator according to one aspect of the present invention, as described above, the coil unit is wave-wound stepwise and sequentially along one side in the circumferential direction from an end of another side to an end of one side in the radial direction by the wave-wound coil parts connected to each other, is changed in direction in the circumferential direction from one to another by the second coil end portion, and then is wave-wound sequentially along another side in the circumferential direction from an end of one side to an end of another side in the radial direction. As a result, it is possible to connect the slot housed portions to each other without providing a portion for switching, at a midpoint, a position in the radial direction of the slot housed portions connected like a portion connected from a second innermost layer to a third innermost layer, unlike a case where, in each of the plurality of slots, the coil unit alternately connects slot housed portions adjacent to each other in the radial direction so as to pass through an innermost layer and the second innermost layer alternately, and then pass through the third innermost layer and an outermost layer alternately. Therefore, it is possible to connect the slot housed portions to each other without providing a portion for connection to extend across another coil unit at a portion at a midpoint of the slot in the radial direction. As a result, it is possible to reduce a size of the coil units of the stator core in the axial direction.

In the stator according to one aspect described above, the first coil end portion forming one wave-wound coil part and the first coil end portion forming another wave-wound coil part, the wave-wound coil parts being connected to each other, preferably connect a pair each of the slot housed portions such that positions in the radial direction of the slot housed portions connected are changed stepwise in parallel to each other.

With this configuration, at the one and another of the wave-wound coil parts connected to each other, positions in the radial direction of the slot housed portions connected are disposed so as to be changed stepwise in parallel to each other. Therefore, conductors that constitute each of one and another of the wave-wound coil parts connected to each other can have a common shape. Therefore, also in a case where the wave-wound coil parts connected to each other are connected so as to be turned, it is possible to reduce an increase in types of shapes of the conductor members, and thus, it is possible to reduce an increase in types of conductor members for forming the coil unit.

In the stator according to one aspect described above, the second coil end portion preferably includes both an outermost coil end portion connecting the slot housed portions disposed on an outermost side in the radial direction in each of the plurality of slots, and an innermost coil end portion connecting the slot housed portions disposed on an innermost side in the radial direction, a plurality of the wave-wound coil parts are preferably provided, and a plurality of the wave-wound coil parts, the outermost coil end portion, and the innermost coil end portion preferably form the coil unit wave-wound by a direction of winding wire being changed a plurality of times in the circumferential direction.

With this configuration, the plurality of wave-wound coil parts, the outermost coil end portion, and the innermost coil end portion form the coil unit wave-wound by the direction of the winding wire being changed a plurality of times in the circumferential direction. Therefore, at each of an innermost side and outermost side in the radial direction of the slots, it is possible to configure the coil unit such that the coil unit is wave-wound by the direction of the winding wire being changed a plurality of times in the circumferential direction. Therefore, also in a case where the number of slot housed portions housed in one slot increases, the coil unit can be configured by being turned a plurality of times at each of the innermost side and the outermost side in the radial direction of the slot. Therefore, it is possible to reduce a size of the coil units of the stator core in the axial direction.

**In** the stator according to one aspect described above, among the slot housed portions disposed in the slots different from each other, the first coil end portion preferably connects a pair each of the slot housed portions disposed to be shifted outward or inward by one in the radial direction.

With this configuration, the coil unit can be configured by connecting a pair each of the slot housed portions disposed to be shifted by one from each other outward or inward in the radial direction. Therefore, the slot housed portions can be densely disposed in each of the plurality of slots. Therefore, it is possible to connect a pair each of the slot housed portions such that the positions in the radial direction of the connected slot housed portions are changed stepwise and sequentially toward one side in the radial direction, while achieving efficient connection to the plurality of slot housed portions disposed in the slots.

In the stator according to one aspect described above, the slot housed portions forming one and another of the wave-wound coil parts connected to each other are preferably disposed in the slots adjacent to each other.

Here, in a case where the slot housed portions are disposed in a common slot, at both the one and another of the wave-wound coil parts connected to each other, positional relationship of the coil unit is biased with respect to magnets disposed on a rotor facing the stator. Therefore, current flowing through the wave-wound coil parts is biased. In consideration of this point, in the present invention, by disposing, in the slots adjacent to each other, the slot housed portions forming one and another of the wave-wound coil parts connected each other, it is possible to reduce chances of current flowing through the wave-wound coil parts being biased.

Note that, in the present application, the following configuration is also considered for the stator according to one aspect described above.

### (Supplement 1)

In a configuration in which slot housed portions forming one and another wave-wound coil parts connected to each other are disposed in slots adjacent to each other, a plurality of wave-wound coil parts and a plurality of second coil end portions preferably form a coil unit wave-wound by a direction of winding wire being changed a plurality of times in a circumferential direction, and the slot housed portions forming the coil unit are preferably disposed alternately in a pair of slots adjacent to each other.

With this configuration, also in a case of forming the coil unit wave-wound by the direction of the winding wire being changed a plurality of times in the circumferential direction, it is possible to reduce chances of current flowing through the coil unit being biased by disposing the slot housed portions forming the coil unit, alternately in a pair of slots adjacent to each other.

### (Supplement 2)

In the stator according to one aspect described above, the coil unit preferably includes a U-phase coil unit, V-phase coil unit, and W-phase coil unit through which each of three-phase alternating current flows, each of the U-phase coil unit, V-phase coil unit, and W-phase coil unit preferably includes a wave-wound coil part formed by the first coil end portion and slot housed portions by a pair each of the slot housed portions being connected by the first coil end portion such that positions in the radial direction of slot housed portions are changed stepwise and sequentially toward one side in a radial direction, and are preferably connected such that the one and another of the wave-wound coil parts connected to each other are, the direction of the winding wire are changed in the circumferential direction by the second coil end portion.

With this configuration, also in a case where the coil part through which each of a U phase, a V phase, and a W phase flows is formed, it is possible to reduce a size of the coil units of the stator core in an axial direction in a case of forming U-phase, V-phase, and W-phase coil units, by forming the U-phase, V-phase, and W-phase coil units such that the positions in the radial direction of the slot housed portions are changed stepwise and sequentially toward one side in the radial direction.

### BRIEF DESCRIPTION OF DRAWINGS

FIG. 1 is a plan view of a rotating electrical machine (stator) according to an embodiment.
FIG. 2 is a circuit diagram of a Y-connected three-phase coil unit according to the embodiment.
FIG. 3 is a perspective view of the stator according to the embodiment.
FIG. 4 is a diagram showing a configuration of a first coil part of a U-phase coil unit.
FIG. 5 is a diagram showing a configuration of a second coil part of the U-phase coil unit.
FIG. 6 is a diagram showing a configuration of a third coil part of the U-phase coil unit.
FIG. 7 is a diagram showing a configuration of a fourth coil part of the U-phase coil unit.
FIG. 8 is a diagram for describing a portion at which slot housed portions of a first turn are connected on an outermost diameter side in a radial direction.
FIG. 9 is a diagram for describing a portion at which the slot housed portions of an eighth turn are connected on an innermost diameter side in the radial direction.
FIG. 10 is a diagram for describing a configuration of conductor members that constitutes a coil unit.

### DESCRIPTION OF EMBODIMENTS

Hereinafter, an embodiment of the present invention will be described with reference to the drawings.

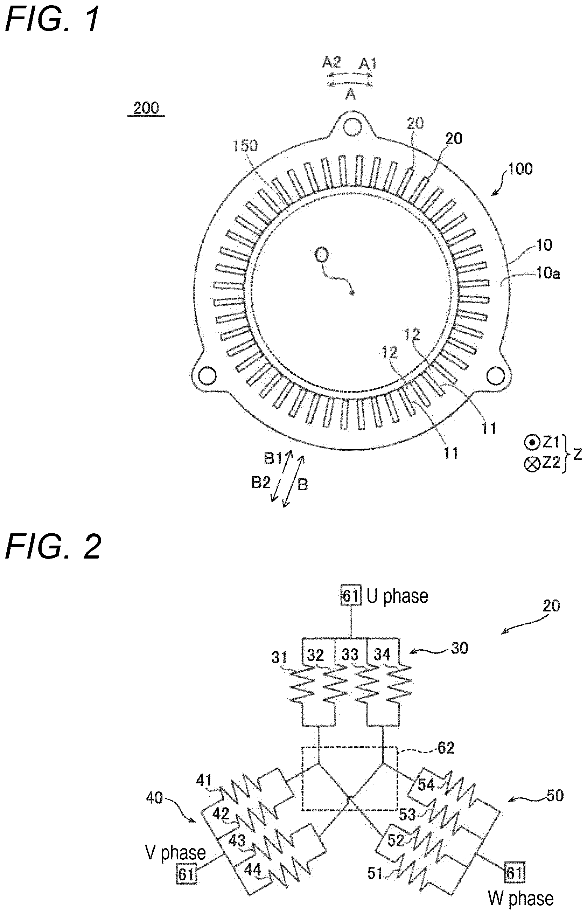

A structure of a rotating electrical machine 200 including a stator 100 according to the present embodiment will be described with reference to FIGS. 1 to 10.

In the present specification, an "axial direction" means a direction (Z direction: refer to FIG. 1) along a rotation axis line (reference sign O) of a stator core 10 (rotor 150). Note that one side in the axial direction is defined as a Z1 direction side, and another side is defined as a Z2 direction side. Furthermore, a "circumferential direction" means a circumferential direction (A direction) of the stator core 10. One side in the circumferential direction is defined as an A1 direction, and another side is defined as an A2 direction. Furthermore, a "radial direction" means a radial direction (B direction) with respect to the rotation axis line of the stator core 10 (rotor 150). Then, a "radially inner side" and an "inner diameter side" mean a direction toward the center of the stator core 10 (B1 direction). Furthermore, a "radially outer side" and an "outer diameter side" mean a direction toward an outside of the stator core 10 (B2 direction).

As shown in FIG. 1, the rotating electrical machine 200 includes the stator 100 and the rotor 150. Each of the stator 100 and the rotor 150 is formed in an annular shape. The stator 100 and the rotor 150 face each other. The rotor 150 is disposed on the radially inner side (B1 direction side) of the stator 100. The rotor 150 is provided with a plurality of permanent magnets (not shown). That is, the rotating electrical machine 200 of the present embodiment is configured as an inner-rotor type rotating electrical machine.

### (Configuration of stator)

The stator 100 includes the stator core 10. The stator core 10 is disposed to face the rotor 150 in the radial direction. Furthermore, the stator core 10 is provided with a plurality of (48, for example) slots 11. Furthermore, teeth 12 are provided between adjacent slots 11. For example, the stator core 10 is formed by laminating a plurality of electromagnetic steel sheets in a central rotation axis direction (Z1 direction and Z2 direction), and is configured to allow a magnetic flux to pass therethrough. Furthermore, the stator core 10 has an end surface 10a on each of one side (Z1 direction side) and another side (Z2 direction side) in the axial direction. Furthermore, the stator 100 includes coil units 20.

As shown in FIG. 2, each of the coil units 20 is connected to an external power supply unit, and is configured to be supplied with electric power (three-phase alternating-current power, for example). Then, the coil units 20 are configured to generate a magnetic field by being supplied with electric power. Each of the coil units 20 includes a U-phase coil unit 30, a V-phase coil unit 40, and a W-phase coil unit 50 through which each three-phase (U-phase, V-phase, and W-phase) alternating current flows.

The U-phase coil unit 30 includes a U-phase first coil part 31, a second coil part 32, a third coil part 33, and a fourth coil part 34 that are connected in parallel to each other. Furthermore, the V-phase coil unit 40 includes a V-phase first coil part 41, a second coil part 42, a third coil part 43, and a fourth coil part 44 that are connected in parallel to each other. Furthermore, the W-phase coil unit 50 includes a W-phase first coil part 51, a second coil part 52, a third coil part 53, and a fourth coil part 54 that are connected in parallel to each other. Then, the U-phase coil unit 30, the V-phase coil unit 40, and the W-phase coil unit 50 are Y-connected (star-connected). That is, alternating-current power of the U phase, the V phase, and the W phase is input from a power line 61 to the U-phase coil unit 30, the V-phase coil unit 40, and the W-phase coil unit 50, respectively. Then, output sides of the U-phase coil unit 30, the V-phase coil unit 40, and the W-phase coil unit 50 are connected to each other via a neutral line 62.

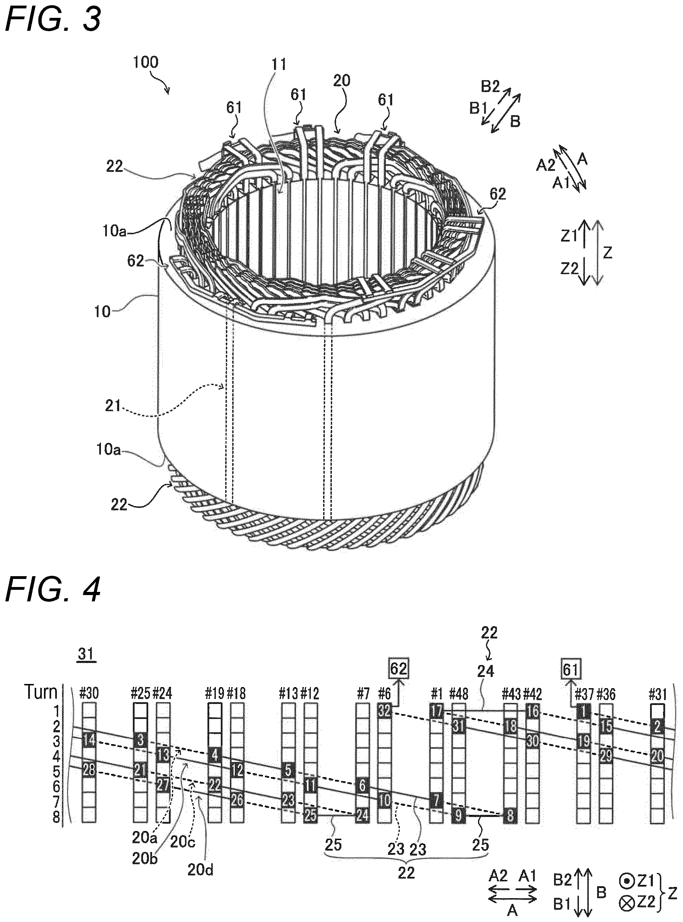

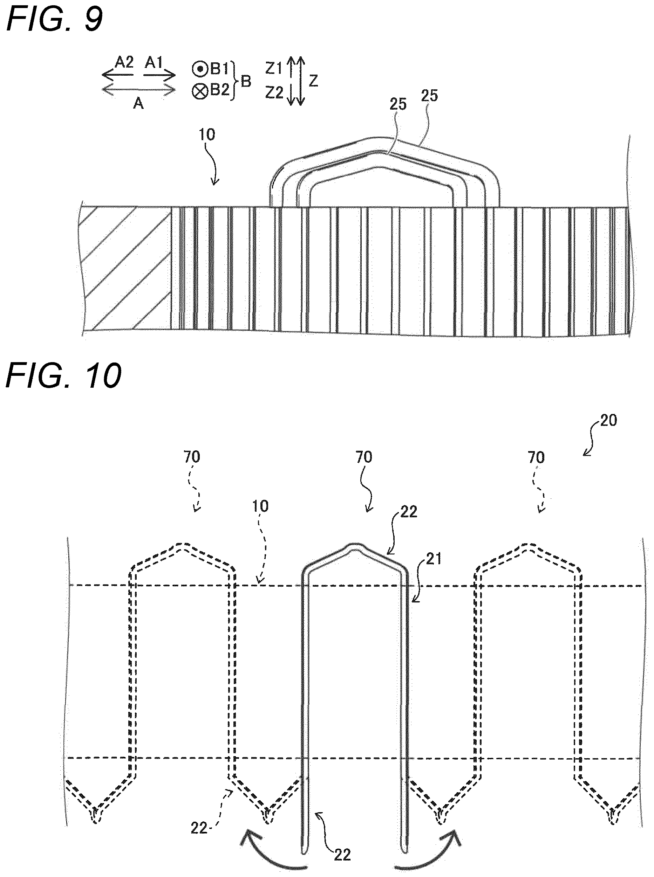

As shown in FIG. 3, the coil units 20 are disposed in the respective plurality of slots 11 and have conductive wire wave-wound around thereof. Specifically, each of the coil units 20 includes slot housed portions 21 and coil end portions 22. The slot housed portions 21 are housed in each of the plurality of slots 11 formed to extend in the axial direction (Z direction). Each of the coil end portions 22 connects a pair each of a plurality of slot housed portions 21. Specifically, each the coil end portions 22 connects slot housed portions 21 housed in slots 11 different from each other. That is, each of the coil units 20 disposed on the stator core 10 is disposed in one slot 11 so as to be directed from one side to another side (from the Z1 direction side to the Z2 direction side) in the axial direction at a portion corresponding to one slot housed portion 21, extends along the end surface 10a provided on the Z2 direction side at a portion corresponding to the coil end portion 22 on the Z2 direction side of the stator core 10, and then is disposed in another slot 11 different from the one slot 11, in the slot 11, so as to be directed from the another side to the one side (from the Z2 direction side to the Z1 direction side) in the axial direction at a portion corresponding to another slot housed portion 21. Then, similarly on the Z1 direction side, the coil unit 20 is formed so as to extend from a slot housed portion 21 along the end surface 10a and be connected to the slot housed portion 21 in another different slot 11. Each of the coil units 20 is configured by wave-winding conductor members 70 (refer to FIG. 10) which are rectangular conductive wire.

Note that, in the coil unit 20, the U-phase coil unit 30, the V-phase coil unit 40, and the W-phase coil unit 50 have similar configuration. Therefore, the U-phase coil unit 30 will be described below.

The U-phase coil unit 30 is disposed on the stator core 10 in a state where the first coil part 31, the second coil part 32, the third coil part 33, and the fourth coil part 34 connected in parallel to each other are combined in a basket shape. Furthermore, one end of each of the first coil part 31, the second coil part 32, the third coil part 33, and the fourth coil part 34 is connected to the power line 61. Alternating-current power is supplied from the power line 61. Then, another end of each of the first coil part 31, the second coil part 32, the third coil part 33, and the fourth coil part 34 is connected to the neutral line 62.

As shown in FIGS. 4 to 7, each of the first coil part 31, second coil part 32, third coil part 33, and fourth coil part 34 of the U-phase coil unit 30 is disposed in the slots 11 of the first (hereinafter, "th" is referred to as "#"), #6, #7, #12, #13, #18, #19, #24, #25, #30, #31, #36, #37, #42, #43, and #48 among the 48 slots 11. Here, the slots 11 of #1 and #48, the slots 11 of #6 and #7, the slots 11 of #12 and #13, the slots 11 of #18 and #19, the slots 11 of #24 and #25, the slots 11 of #30 and #31, the slots 11 of #36 and #37, and the slots 11 of #42 and #43 are two slots 11 adjacent to each other in the circumferential direction (A direction). Note that FIGS. 4 to 7 are diagrams showing the stator core 10 having an annular shape cut open such that a vertical direction represents the radial direction (B direction) of the stator core 10 and a horizontal direction represents the circumferential direction (A direction) of the stator core 10. That is, in FIGS. 4 to 7, left and right ends in the drawings are connected to each other. Furthermore, although not shown, the V-phase coil unit 40 and the W-phase coil unit 50 are disposed in the stator core 10, in a state of being shifted from the U-phase coil unit 30 by two slots 11 and four slots, respectively.

The plurality of slot housed portions 21 are housed in each of the plurality of slots 11 in a state of being disposed side by side along the radial direction (B direction) of the stator core 10. Specifically, in the present embodiment, in one slot 11, eight slot housed portions 21 are disposed side by side in the radial direction. For example, in one slot 11, the slot housed portion 21 disposed on an outermost side (outer diameter side: B2 direction side) is defined as of a first turn (first layer), and the slot housed portion 21 disposed on an innermost side (inner diameter side: B1 side) is defined as of an eighth turn (eighth layer). Note that, in FIGS. 4 to 7, the slot housed portions 21 are disposed such that current flows through positions in order of white numerals on black backgrounds.

In the present embodiment, the coil end portions 22 have a portion 23, a portion 24, and a portion 25. In FIGS. 4 to 7, the coil end portions 22 (portion 23, portion 24, and portion 25) indicated by solid lines are disposed on the Z1 direction side of the stator core 10, and the coil end portion 22 (portion 23) indicated by a broken line is disposed on the Z2 direction side of the stator core 10. Note that the portion 23 is an example of a "first coil end portion" in the claims. Furthermore, the portion 24 is an example of a "second coil end portion" and an example of an "outermost coil end portion" in the claims. Furthermore, the portion 25 is an example of the "second coil end portion" and an example of an "innermost coil end portion" in the claims. Furthermore, in FIGS. 4 to 7, the coil end portions 22 (portion 23, portion 24, and portion 25) are schematically shown as straight lines as viewed from the Z direction, but the coil end portions 22 (portion 23, portion 24, and portion 25) may have a curved shape as viewed from the Z direction.

A portion 23 connects a pair each of the slot housed portions 21 at different positions in the radial direction (B direction) among a plurality of slot housed portions 21 housed in slots 11 different from each other. Specifically, the portion 23 connects slot housed portions 21 such that positions (the number of turns) in the radial direction of the slot housed portions 21 connected are changed stepwise and sequentially toward one side in the radial direction. That is, the portion 23 connects a pair each of the slot housed portions 21 such that the number of turns increases toward one side (A1 direction side) in the circumferential direction. Then, in the coil unit 20, there are formed four wave-wound coil parts, which are a wave-wound coil part 20a, a wave-wound coil part 20b, a wave-wound coil part 20c, and a wave-wound coil part 20d wave-wound around the stator core 10 along a common circumferential direction by the portion 23 and the slot housed portions 21.

In the present embodiment, in each of the wave-wound coil parts 20a to 20d, a plurality of portions 23 and slot housed portions 21 are connected, by which the slot housed portions 21 disposed on an outermost diameter side (first turn) to the slot housed portions 21 disposed on an innermost diameter side (eighth turn) are sequentially connected. That is, the plurality of portions 23 connect a pair each of the slot housed portions 21 such that the positions in the radial direction of the slot housed portions 21 connected are changed stepwise and sequentially from the slot housed portion 21 disposed at a position of the first turn that is an end on the another side (B2 direction side, for example) in the radial direction in the slot 11, to the slot housed portion 21 disposed at a position of the eighth turn that is an end on the one side (B1 direction side, for example). In the present embodiment, the portions 23 connect a pair each of the slot housed portions 21 among the slot housed portions 21 disposed in slots 11 different from each other, disposed to be shifted outward or inward by one in the radial direction (B direction). That is, in each of the wave-wound coil parts 20a to 20d, the portions 23 connect slot housed portions 21 while sequentially shifting by one turn from the eighth turn to the first turn.

The wave-wound coil parts 20a to 20d are provided so as to go and return at least once (twice in the present embodiment). That is, the wave-wound coil parts 20a to 20d are provided so that flowing current goes and returns (twice in the present embodiment) at least once along the circumferential direction. In other words, a direction of the current flowing through the coil unit 20 along the circumferential direction by the four wave-wound coil parts 20a to 20d (direction of winding wires in the circumferential direction) is changed at least once (three times in the present embodiment). One wave-wound coil part 20a is wave wound stepwise and sequentially toward one side (B1 direction side) in the radial direction along one side in the circumferential direction by the slot housed portions 21 and the portion 23 so that current flows toward one side (A1 direction, for example) in the circumferential direction of the stator core 10. Then, a wave-wound coil part 20b connected to the wave-wound coil part 20a is wave-wound stepwise and sequentially toward another side (B2 direction side) in the radial direction along another side in the circumferential direction so that current flows toward another side (A2 direction, for example) in the circumferential direction on an opposite side of the wave-wound coil part 20a. Similarly, the wave-wound coil part 20c and the wave-wound coil part 20d are also wave-wound so that current flows toward one side and another side in the circumferential direction, respectively. Then, the wave-wound coil part 20a, the wave-wound coil part 20b, the wave-wound coil part 20c, and the wave-wound coil part 20d are connected in this order to be formed as each of the first coil part 31, second coil part 32, third coil part 33, and fourth coil part 34 of the U-phase coil unit 30 in the coil unit 20. That is, each of the first coil part 31, the second coil part 32, the third coil part 33, and the fourth coil part 34 is disposed on the stator core 10 while turning (changing) the direction thereof three times in the circumferential direction.

In the present embodiment, the wave-wound coil parts 20a to 20d are connected to each other by either the portion 24 or the portion 25. Each of the portion 24 and the portion 25 connects a pair each of the slot housed portions 21 at a common position in the radial direction (having the number of turns in common), among a plurality of slot housed portions 21 housed in slots 11 different from each other. Each of the portion 24 and the portion 25 connects a pair each of the slot housed portions 21, thereby connecting at least a pair of the wave-wound coil parts 20a to 20d wave-wound stepwise and sequentially, from an end of another side to an end of one side in the radial direction along the common circumferential direction. Therefore, the coil unit 20 is wave-wound stepwise and sequentially along one side in the circumferential direction from an end of another side (B2 direction side, for example) to an end of one side (B 1 direction side, for example) in the radial direction by the wave-wound coil parts 20a to 20d connected to each other, is changed in direction in the circumferential direction from one to another (from A1 direction side to A2 direction side, for example) by the portion 24 and the portion 25, and then is wave-wound sequentially along another side in the circumferential direction from an end of one side to an end of another side in the radial direction. Specifically, in each of the plurality of slots 11, the portion 24 connects slot housed portions 21 disposed on the outermost side (first turn) in the radial direction. In each of the plurality of slots 11, the portion 25 connects slot housed portions 21 disposed on the innermost side (eighth turn) in the radial direction. Then, the portion 24 or the portion 25 connects a pair each of the slot housed portions 21 to each other, by which mutually connected one and another of go-and-return wave-wound coil parts among the wave-wound coil parts 20a to 20d formed by the portions 23 and the slot housed portions 21 are turned (the direction of the winding wire in the circumferential direction is changed) and connected. For example, in the first coil part 31, there is formed one conductor (winding wire) turned a plurality of times (the direction of the winding wire in the circumferential direction is changed a plurality of times) and wave-wound by the four wave-wound coil parts 20a to 20d, one portion 24, and two portions 25.

Specifically, as shown in FIG. 4, in the first coil part 31, the power line 61 is connected to the slot housed portion 21 (portion of white numeral 1) disposed on the outermost diameter side (first turn) of the slot 11 of #37. Then, after the slot housed portion 21 extends in the Z2 direction along the slot 11, the portion 23 extends from #37 to #31 as the coil end portion 22 on the Z2 direction side. Then, on the Z2 direction side of the stator core 10, the portion 23 is connected to the slot housed portion 21 (portion of numeral 2) disposed in a second turn shifted inward by one from the outermost diameter side in the slot 11 of #31. Thereafter, the portion 23 is connected to the slot housed portions 21 alternately on the Z1 direction side and the Z2 direction side in order of a third turn of the slot 11 of #25, a fourth turn of the slot 11 of #19, and a fifth turn of the slot 11 of #13, and is connected up to the slot housed portion 21 (portion of numeral 8) of the eighth turn of the slot 11 of #43 while increasing the number of turns inward one by one. In this manner, the wave-wound coil part 20a connected by the eight slot housed portions 21 and the seven portions 23 is formed.

Then, the portion 25 is provided to be turned (change the circumferential direction of the winding wire) on the Z1 direction side of the stator core 10 from the slot housed portion 21 (portion of white numeral 8) of the eighth turn of the slot 11 of #43 to the slot housed portion 21 (portion of numeral 9) of the eighth turn of the slot 11 of #48. After being turned by the portion 25, the wave-wound coil part 20b is formed to the slot 11 of #42, similarly to the wave-wound coil part 20a, by changing the direction thereof to the A2 direction side in the circumferential direction from the slot 11 of #48 provided with the portion of numeral 9. Then, because the portion 24 is provided on the Z1 direction side of the stator core 10 from the slot housed portion 21 (portion of numeral 16) of the first turn of the slot 11 of #42 to the slot housed portion 21 (portion of numeral 17) of the first turn of the slot 11 of #1, the first coil part 31 is turned from the wave-wound coil part 20b to the wave-wound coil part 20c. Thereafter, the first coil part 31 is similarly turned from the wave-wound coil part 20c to the wave-wound coil part 20d by the portion 25. In this manner, one first coil part 31 is formed by the four wave-wound coil parts 20a to 20d turned three times. Note that the wave-wound coil part 20d is connected to the neutral line 62 from the slot housed portion 21 of the first turn of the slot 11 of #6 (portion of numeral 32).

That is, in the portions 23 of the coil end portions 22, portions connecting the second turn to the third turn, the fourth turn to the fifth turn, and the sixth turn to the seventh turn are disposed on the Z1 direction side. Furthermore, the portion 24 connecting the first turns and the portion 25 connecting the eighth turns are all disposed on the Z1 direction side. Note that the power line 61 and the neutral line 62 are also connected on the Z1 direction side.

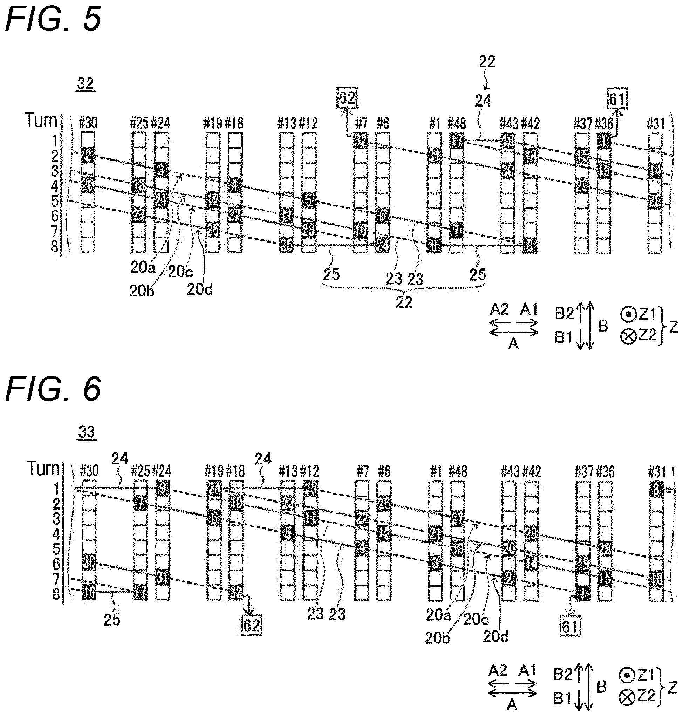

As shown in FIGS. 5 to 7, similarly to the first coil part 31, each of the second coil part 32, the third coil part 33, and the fourth coil part 34 is configured as a part of the coil unit 20 turned a plurality of times (the direction of the winding wire in the circumferential direction is changed a plurality of times) and wave-wound by the four wave-wound coil parts 20a to 20d being turned.

Furthermore, in the present embodiment, among the wave-wound coil parts 20a to 20d, the portion 23 forming one of go-and-return wave-wound coil parts (one of the wave-wound coil parts 20a to 20d connected to each other) and the portion 23 forming another of the go-and-return wave-wound coil parts (another of the wave-wound coil parts 20a to 20d connected to each other) connect a pair each of the slot housed portions 21 so that positions in the radial direction of the connected slot housed portions 21 are changed stepwise in parallel to each other (in a slope shape). Furthermore, the number of the slots 11 (pitches) across which the portion 23 extends is common in each of the plurality of wave-wound coil parts 20a to 20d. Specifically, the portion 23 connects the slot housed portions 21 across the five slots 11 while connecting the slot housed portions 21 by shifting the turns by one. In other words, in each of the plurality of wave-wound coil parts 20a to 20d, the number of pitches of the portion 23 is all "six". The portions 23 have a common pitch on one side (Z 1 direction side) and another side (Z2 direction side) of the stator core 10. Note that the term "parallel" as used herein means that the positions in the radial direction of the slot housed portions 21 connected to the portions 23 are parallel in a state of being disposed along the circumferential direction. That is, this means that the positions of the slot housed portions 21 are parallel in a state in which the stator core 10 having an annular shape is shown cut open as shown in FIGS. 4 to 7.

Note that, in each of the portions 24 and 25, there are two types of the number of pitches, which are five pitches and seven pitches. For example, in the first coil part 31 in FIG. 4, the portion 24 having seven pitches is provided between the slot 11 of #42 and the slot 11 of #1, and the portions 25 having five pitches is provided between #43 and #48, and between #7 and #12. Meanwhile, in the second coil part 32 in FIG. 5, the portion 24 having five pitches is provided between the slot 11 of #43 and the slot 11 of #48, and the portions 25 having seven pitches is provided between #42 and #1, and between #6 and #13.

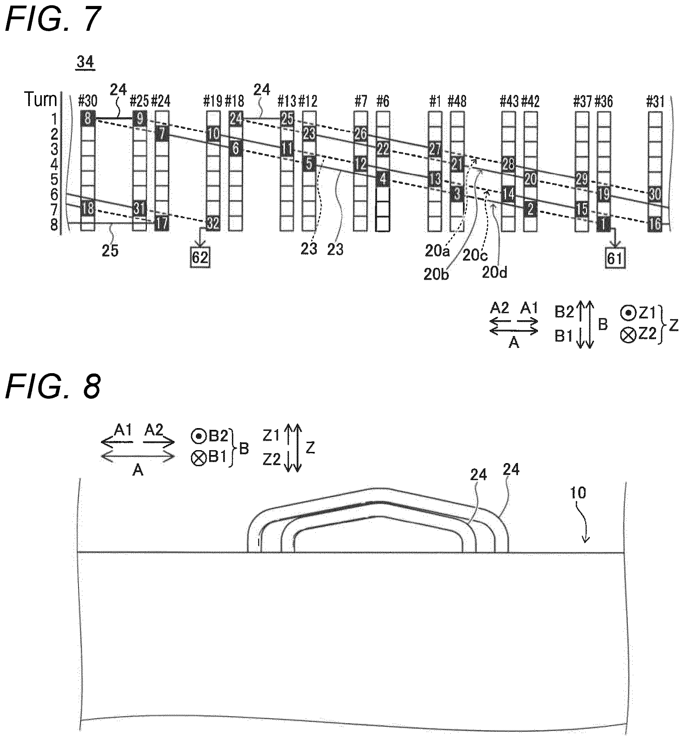

Then, as shown in FIGS. 8 and 9, the portions 24 or portions 25, which are connected to the slot housed portions 21 disposed in the slots 11 of which positions in the radial direction are common to each other, and have different number of pitches, are disposed so as to overlap each other as viewed from the axial direction (Z direction). The portion 24 or portion 25 having a large number of pitches is disposed on an upper side (Z1 direction side) of the portion 24 or portion 25 having a small number of pitches. Specifically, the portion 24 and portion 25 having seven pitches are disposed on the upper side, so as to cover the portions 24 and 25 having five pitches, respectively.

Furthermore, as shown in FIGS. 4 to 7, among the plurality of wave-wound coil parts 20a to 20d, the slot housed portion 21 forming one of go-and-return wave-wound coil parts (one of the wave-wound coil parts 20a to 20d connected to each other), and the slot housed portion 21 forming another of the go-and-return wave-wound coil parts (another of the wave-wound coil parts 20a to 20d connected to each other) are connected to each other and disposed in the slots 11 adjacent to each other. Furthermore, the slot housed portions 21 forming the coil unit 20 turned a plurality of times (wave-wound by the direction of the winding wire being changed a plurality of times in the circumferential direction) are disposed alternately in a pair of slots 11 adjacent to each other. Specifically, the respective U-phase coil unit 30, V-phase coil unit 40, and W-phase coil unit 50 are disposed alternately in a pair of slots 11 adjacent to each other, along the radial direction.

For example, in the U-phase first coil part 31 in FIG. 4, the slot housed portions 21 forming the wave-wound coil parts 20a to 20d are housed in two slots 11 adjacent to each other in the circumferential direction, that is, #1 and #48, #6 and #7, #12 and #13, #18 and #19, #24 and #25, #30 and #31, #36 and #37, #42 and #43. Then, between adjacent ones (for one going and returning) of the wave-wound coil parts 20a to 20d, the slot housed portions 21 are alternately disposed in different slots 11. Then, the U-phase second coil part 32, third coil part 33, and fourth coil part 34 in FIGS. 5 to 7 are also similar to the U-phase first coil part 31. As a result, it is possible to reduce chances of positional relationship of the rotor 150 being biased with respect to the permanent magnet (not shown) in each of the U-phase first coil part 31, second coil part 32, third coil part 33, and fourth coil part 34.

### (Structure of conductor member)

As shown in FIG. 10, the coil units 20 are formed as conductive wire wave-wound by connecting a plurality of conductor members 70. Specifically, in the coil unit 20, the slot housed portions 21 and each of the coil end portions 22 (portion 23, portion 24, and portion 25) are formed by connecting (joining) the plurality of conductor members 70. Each of the plurality of conductor members 70 has an inverted U shape. The conductor members 70 include a pair of slot housed portions 21, and the coil end portions 22 that connect the pair of slot housed portions 21 on one side (Z1 side) in the axial direction of the stator core 10. In the conductor members 70, a shape of the coil end portion 22 differs for each of the portion 23, the portion 24, and the portion 25. In the stator 100, the conductor members 70 are disposed such that the slot housed portions 21 are housed in each of the slots 11, and then the coil end portions 22 on the Z2 direction side are bent outward in the circumferential direction and joined to the coil end portions 22 of different conductor members 70 on the Z2 direction side with laser joining or the like.

Furthermore, in the present embodiment, the coil units 20 are configured by using seven types of conductor members 70. In each of the coil units 20, three types of conductor members 70 that constitute a pair of slot housed portions 21 and a portion 23, two types of conductor members 70 that constitute a pair of slot housed portions 21 and a portion 24, and two types of conductor members 70 that constitute a pair of slot housed portions 21 and a portion 25 are used. The three types of conductor members 70 that constitute a pair of slot housed portions 21 and a portion 23 are a conductor member 70 that a portion 23 connects on the Z1 direction side from the second turn to the third turn, a conductor member 70 that a portion 23 connects on the Z1 direction side from the fourth turn to the fifth turn, and a conductor member 70 that a portion 23 connects on the Z1 direction side from the sixth turn to the seventh turn. The two types of conductor members 70 that constitute a pair of slot housed portions 21 and a portion 24, and the two types of conductor members 70 that constitute a pair of slot housed portions 21 and a portion 25 have five pitches and 7 pitches, respectively.

### (Effects of present embodiment)

In the present embodiment, the following effects can be obtained.

In the present embodiment, as described above, the coil unit 20 is wave-wound stepwise and sequentially along one side in the circumferential direction from an end of another side to an end of one side in the radial direction by the wave-wound coil parts 20a to 20d connected to each other, is changed in direction in the circumferential direction from one to another by the portions 24 and 25 (second coil end portion,) and then is wave-wound sequentially along another side in the circumferential direction from an end of one side to an end of another side in the radial direction. As a result, it is possible to connect the slot housed portions 21 to each other without providing a portion for switching, at a midpoint, a position in the radial direction of the slot housed portions 21 connected like a portion connected from a second innermost layer to a third innermost layer, unlike a case where, in each of the plurality of slots 11, the coil unit alternately connects slot housed portions 21 adjacent to each other in the radial direction so as to pass through an innermost layer (turn) and the second innermost layer alternately, and then pass through the third innermost layer and an outermost layer alternately. Therefore, it is possible to connect the slot housed portions 21 to each other without providing a portion for connection so as to extend across another coil unit 20 at a portion at a midpoint of the slot 11 in the radial direction. As a result, it is possible to reduce a size of the coil units 20 of the stator core 10 in the axial direction.

Furthermore, in each of the plurality of slots 11, the wave-wound coil parts 20a to 20d can be configured such that the slot housed portions 21 connected stepwise from the end on one side toward the end on another side in the radial direction are disposed. Therefore, the end portions of the wave-wound coil parts 20a to 20d can be disposed on an innermost side or outermost side in the radial direction. Therefore, in a case where the power line 61, the neutral line 62, or the like is connected to the coil unit 20, it is possible to reduce complicating manufacturing processes as compared with a case where the power line 61, the neutral line 62, or the like is connected to a conductor (conductor member 70) at a midpoint of the slots 11.

Furthermore, in a case where a direction of the winding wire in the circumferential direction is changed at a position at a midpoint in the radial direction in each of the plurality of slots 11, it is necessary to arrange conductors in consideration of interference in both the axial direction and the radial direction. Therefore, it is considered that a size of the conductors increases in the axial direction. In addition, in a case where the portions for changing the direction of the winding wire in the circumferential direction are arranged to overlap each other in the axial direction, the size further increases in the axial direction, in consideration of the interference. Meanwhile, in the present embodiment, the portion 24 and the portion 25 (second coil end portion) connect the wave-wound coil parts 20a to 20d on the innermost side or outermost side in the radial direction. Therefore, flexibility in arrangement in the radial direction is increased. Therefore, also in a case where the portions 24 or the portions 25 are disposed in the axial direction to overlap each other on the innermost side or outermost side in the radial direction, it is possible to reduce an increase in the size of the conductors in the axial direction as compared with a case where the direction of the winding wire in the circumferential direction is changed at a position at a midpoint in the radial direction.

In the present embodiment, as described above, at the one and another of the wave-wound coil parts 20a to 20d connected to each other, positions in the radial direction of the slot housed portions 21 connected are disposed so as to be changed stepwise in parallel to each other. Therefore, conductors (conductor members 70) that constitute each of one and another of the wave-wound coil parts 20a to 20d connected to each other can have a common shape. Therefore, also in a case where the wave-wound coil parts 20a to 20d connected to each other are connected so as to be turned, it is possible to reduce an increase in types of shapes of the conductor members 70. Therefore, it is possible to reduce an increase in types of conductor members 70 for forming the coil unit 20.

In the present embodiment, as described above, the plurality of wave-wound coil parts 20a to 20d, the portion 24 (outermost coil end portion), and the portion 25 (innermost coil end portion) form the coil units 20 wave-wound by a direction of winding wire being changed a plurality of times in a circumferential direction. Therefore, at each of an innermost side and outermost side in the radial direction of the slots 11, it is possible to configure the coil unit 20 such that the coil unit is wave-wound by the direction of the winding wire being changed a plurality of times in the circumferential direction. Therefore, also in a case where the number of slot housed portions 21 housed in one slot 11 increases, the coil unit 20 can be configured by being turned a plurality of times at each of the innermost side and the outermost side in the radial direction of the slot 11. Therefore, it is possible to reduce a size of the coil units 20 of the stator core 10 in the axial direction.

In the present embodiment, as described above, the coil unit 20 can be configured by connecting a pair each of the slot housed portions 21 disposed to be shifted by one from each other outward or inward in the radial direction. Therefore, the slot housed portions 21 can be densely disposed in each of the plurality of slots 11. Therefore, it is possible to connect a pair each of the slot housed portions 21 such that the positions in the radial direction of the connected slot housed portions 21 are changed stepwise and sequentially toward one side in the radial direction, while achieving efficient connection to the plurality of slot housed portions 21 disposed in the slots 11.

Here, in a case where the slot housed portions 21 are disposed in a common slot 11, at both the one and another of the wave-wound coil parts 20a to 20d connected to each other, positional relationship of the coil unit 20 is biased with respect to magnets disposed on a rotor 150 facing the stator 100. Therefore, current flowing through the wave-wound coil parts 20a to 20d is biased. In consideration of this point, in the present embodiment, as described above, it is possible to reduce chances of current flowing through the wave-wound coil parts 20a to 20d being biased, by disposing, in the slots 11 adjacent to each other, the slot housed portions 21 forming one and another of the wave-wound coil parts 20a to 20d connected to each other.

### [Modifications]

Note that it should be construed that the embodiments disclosed herein are by way of illustration in all respects, not by way of limitation. It is intended that the scope of the present invention is defined by claims, not by the description of embodiments above, and encompasses all modifications and variations equivalent in meaning and scope to the claims.

For example, in the above embodiment, an example has been described in which the positions in the radial direction of the slot housed portions 21 connected to the portions 23 (first coil end portion) forming one and another of the wave-wound coil parts 20a to 20d in one going and returning are changed stepwise in parallel to each other, but the present invention is not limited thereto. In the present invention, the positions in the radial direction of the slot housed portions may not be parallel to each other between one side and another in one going and returning.

Furthermore, in the above embodiment, an example has been described in which the four wave-wound coil parts 20a to 20d form the coil units 20 turned three times, but the present invention is not limited thereto. In the present invention, the coil units may be configured to be turned only once by two wave-wound coil parts. In this case, the second coil end portion that changes the direction of the winding wire in the circumferential direction may be disposed at an inner end in the radial direction as one side in the radial direction, or the second coil end portion that changes the direction of the winding wire in the circumferential direction may be disposed at an outer end in the radial direction. That is, the second coil end portion may be either the innermost coil end portion or the outermost coil end portion. Furthermore, one side and another side in the circumferential direction may be opposite to the directions in the stator in the above embodiment.

Furthermore, in the above embodiment, an example has been described in which the portion 23 (first coil end portions) connects a pair each of the slot housed portions 21 among the slot housed portions 21 disposed in the slots 11 different from each other, disposed to be shifted outward or inward in the radial direction, but the present invention is not limited thereto. In the present invention, the first coil end portion may connect the slot housed portions disposed to be shifted by two or more of the slot housed portions. That is, the slot housed portions shifted from each other by two or more turns may be connected to each other.

Furthermore, in the above embodiment, an example has been described in which the slot housed portions 21 forming one and another of go-and-return wave-wound coil parts among the wave-wound coil parts 20a to 20d are disposed in the slots 11 adjacent to each other, but the present invention is not limited thereto. In the present invention, the slot housed portions forming one of go-and-return wave-wound coil parts and the slot housed portions forming another of the go-and-return wave-wound coil parts may be disposed in a common slot. Furthermore, the slot housed portions forming one of go-and-return wave-wound coil parts and the slot housed portions forming another of the go-and-return wave-wound coil parts may be disposed in slots separated from each other.

Furthermore, in the above embodiment, an example has been described in which the coil units 20 are formed by the conductor members 70 having an inverted U shape, but the present invention is not limited thereto. In the present invention, the coil end portions may be formed by disposing rod-shaped conductor members as the slot housed portions in the slots, and then joining conductor members different from the rod-shaped conductor members. Furthermore, the coil units may be formed by combining an inverted U-shaped conductor member and a U-shaped conductor member, from one side and another side in the axial direction of the stator core. Furthermore, the coil units may be formed of a continuous wave-wound conductor.

Furthermore, in the above embodiment, an example has been described in which each of the U-phase coil unit 30, the V-phase coil unit 40, and the W-phase coil unit 50 includes four parallel coils, but the present invention is not limited thereto. In the present invention, each of the U-phase coil unit, the V-phase coil unit, and the W-phase coil unit may not have a parallel configuration, or may have a two-parallel configuration.

Furthermore, in the above embodiment, an example has been described in which 48 slots 11 are provided in the stator core 10, and eight slot housed portions 21 are housed in each slot 11 side by side in the radial direction, but the present invention is not limited thereto. In the present invention, the number of slots of the stator core may be other than 48. Furthermore, the number of slot housed portions housed in one slot may be other than eight.

### [Summary of present embodiment]

The present embodiment has at least the following configurations.

A stator (100) includes a stator core (10) including a plurality of slots (11) extending in an axial direction, and a coil unit (20) around which conductive wire is wave-wound, the coil unit (20) being disposed in each of the plurality of slots (11), in which the coil unit (20) includes a plurality of slot housed portions (21) housed in each of the plurality of slots (11), in a state of being disposed side by side along a radial direction of the stator core (10), a first coil end portion (23) connecting a pair each of the slot housed portions (21) different from each other in position in the radial direction, among the plurality of slot housed portions (21) housed in the slots (11) different from each other, and a second coil end portion (24, 25) connecting a pair each of the slot housed portions (21) common to each other in position in the radial direction, among the plurality of slot housed portions (21) housed in the slots (11) different from each other, the first coil end portion (23) forms a wave-wound coil part (20a, 20b, 20c, 20d) wave-wound around the stator core (10) with the slot housed portions (21) along a circumferential direction by connecting a pair each of the slot housed portions (21) such that positions in the radial direction of the slot housed portions (21) connected are changed stepwise and sequentially toward one side in the radial direction from an end of another side to an end of one side in the radial direction, the second coil end portion (24, 25) connects at least a pair of the wave-wound coil parts (20a, 20b, 20c, 20d) wave-wound stepwise and sequentially, by connecting a pair each of the slot housed portions (21), and the coil unit (20) is wave-wound stepwise and sequentially along one side in the circumferential direction from an end of another side to an end of one side in the radial direction by the wave-wound coil parts (20a, 20b, 20c, 20d) connected to each other, is changed in direction in the circumferential direction from one to another by the second coil end portion (24, 25), and then is wave-wound sequentially along another side in the circumferential direction from an end of one side to an end of another side in the radial direction.

With this configuration, it is possible to connect the slot housed portions (21) to each other without providing a portion for switching, at a midpoint, a position in the radial direction of the slot housed portions (21) connected like a portion connected from a second innermost layer to a third innermost layer, unlike a case where, in each of the plurality of slots (11), the coil unit alternately connects slot housed portions (21) adjacent to each other in the radial direction so as to pass through an innermost layer and the second innermost layer alternately, and then pass through the third innermost layer and an outermost layer alternately. Therefore, it is possible to connect the slot housed portions (21) to each other without providing a portion for connection so as to extend across another coil unit (20) a portion at a midpoint of the slot (11) in the radial direction. As a result, it is possible to reduce a size of the coil units (20) of the stator core (10) in the axial direction.

The first coil end portion (23) forming one of the wave-wound coil parts (20a, 20b, 20c, 20d) and the first coil end portion (23) forming another of the wave-wound coil parts (20a, 20b, 20c, 20d), the wave-wound coil parts (20a, 20b, 20c, 20d) being connected to each other, connect a pair each of the slot housed portions (21) such that positions in the radial direction of the slot housed portions (21) connected are changed stepwise in parallel to each other.

With this configuration, at the one and another of the wave-wound coil part (20a, 20b, 20c, 20d) connected to each other, positions in the radial direction of the slot housed portions (21) connected are disposed so as to be changed stepwise in parallel to each other. Therefore, conductors that constitute each of one and another of the wave-wound coil part (20a, 20b, 20c, 20d) connected to each other can have a common shape. Therefore, also in a case where the wave-wound coil part (20a, 20b, 20c, 20d) connected to each other are connected so as to be turned, it is possible to reduce an increase in types of shapes of the conductor members. Therefore, it is possible to reduce an increase in types of conductor members for forming the coil unit (20).

The second coil end portion (24, 25) includes both an outermost coil end portion (24) connecting the slot housed portions (21) disposed on an outermost side in the radial direction in each of the plurality of slots (11), and an innermost coil end portion (25) connecting the slot housed portions (21) disposed on an innermost side in the radial direction, a plurality of the wave-wound coil part (20a, 20b, 20c, 20d) are provided, and a plurality of the wave-wound coil part (20a, 20b, 20c, 20d), the outermost coil end portion (24), and the innermost coil end portion (25) form the coil units (20) wave-wound by a direction of winding wire being changed a plurality of times in the circumferential direction.

With this configuration, the plurality of wave-wound coil parts (20a, 20b, 20c, 20d), the outermost coil end portion (24), and the innermost coil end portion (25) form the coil units (20) wave-wound by a direction of winding wire being changed a plurality of times in the circumferential direction. Therefore, at each of an innermost side and outermost side in the radial direction of the slots (11), it is possible to configure the coil unit (20) such that the coil unit (20) is wave-wound by the direction of the winding wire being changed a plurality of times in the circumferential direction. Therefore, also in a case where the number of slot housed portions (21) housed in one slot (11) increases, the coil unit (20) can be configured by being turned a plurality of times at each of the innermost side and the outermost side in the radial direction of the slot (11). Therefore, it is possible to reduce a size of the coil units (20) of the stator core (10) in the axial direction.

Among the slot housed portions (21) disposed in the slots (11) different from each other, the first coil end portion (23) connects a pair each of the slot housed portions (21) disposed to be shifted outward or inward by one in the radial direction.

With this configuration, the coil unit (20) can be configured by connecting a pair each of the slot housed portions (21) disposed to be shifted by one from each other outward or inward in the radial direction. Therefore, the slot housed portions (21) can be densely disposed in each of the plurality of slots (11). Therefore, it is possible to connect a pair each of the slot housed portions (21) such that the positions in the radial direction of the connected slot housed portions (21) are changed stepwise and sequentially toward one side in the radial direction, while achieving efficient connection to the plurality of slot housed portions (21) disposed in the slots (11).

The slot housed portions (21) forming one side of the wave-wound coil parts (20a, 20b, 20c, 20d) and the slot housed portions (21) forming another side are disposed in the slots (11) adjacent to each other, the wave-wound coil parts (20a, 20b, 20c, 20d) being connected to each other.

Here, in a case where the slot housed portions (21) are disposed in a common slot (11), at both the one and another of the wave-wound coil parts (20a, 20b, 20c, 20d) connected to each other, positional relationship of the coil unit (20) is biased with respect to magnets disposed on a rotor (150) facing the stator (100). Therefore, current flowing through the wave-wound coil parts (20a, 20b, 20c, 20d) is biased. In consideration of this point, in the present embodiment, it is possible to reduce chances of current flowing through the wave-wound coil parts (20a, 20b, 20c, 20d) being biased by disposing, in the slots (11) adjacent to each other, the slot housed portions (21) forming one and another of the wave-wound coil parts (20a, 20b, 20c, 20d) connected to each other, adjacent to each other.

### REFERENCE SIGNS LIST

10: Stator core, 11: Slot, 20: Coil unit, 20a, 20b, 20c, 20d: Wave-wound coil part, 21: Slot housed portion, 23: Portion (first coil end portion), 24: Portion (second coil end portion, outermost coil end portion), 25: Portion (second coil end portion, innermost coil end portion), and 100: Stator

## Claims

1. A stator comprising:
a stator core including a plurality of slots extending in an axial direction; and a coil unit around which conductive wire is wave-wound, the coil unit being disposed in each of the plurality of slots, wherein
the coil unit includes
a plurality of slot housed portions housed in each of the plurality of slots, in a state of being disposed side by side along a radial direction of the stator core,
a first coil end portion connecting a pair each of the slot housed portions different from each other in position in the radial direction, among the plurality of slot housed portions housed in the slots different from each other, and a second coil end portion connecting a pair each of the slot housed portions common to each other in position in the radial direction, among the plurality of slot housed portions housed in the slots different from each other,
the first coil end portion forms a wave-wound coil part wave-wound around the stator core with the slot housed portions along a circumferential direction by connecting a pair each of the slot housed portions such that positions in the radial direction of the slot housed portions connected are changed stepwise and sequentially toward one side in the radial direction from an end of another side to an end of one side in the radial direction,
the second coil end portion connects at least a pair of the wave-wound coil parts wave-wound stepwise and sequentially, by connecting a pair each of the slot housed portions, and
the coil unit is wave-wound stepwise and sequentially along one side in the circumferential direction from an end of another side to an end of one side in the radial direction by the wave-wound coil parts connected to each other, is changed in direction in the circumferential direction from one to another by the second coil end portion, and then is wave-wound sequentially along another side in the circumferential direction from an end of one side to an end of another side in the radial direction.

2. The stator according to claim 1, wherein
the first coil end portion forming one of the wave-wound coil parts and the first coil end portion forming another of the wave-wound coil parts, the wave-wound coil parts being connected to each other, connect a pair each of the slot housed portions such that positions in the radial direction of the slot housed portions connected are changed stepwise in parallel to each other.

3. The stator according to claim 1, wherein
the second coil end portion includes both an outermost coil end portion connecting the slot housed portions disposed on an outermost side in the radial direction in each of the plurality of slots, and an innermost coil end portion connecting the slot housed portions disposed on an innermost side in the radial direction,
a plurality of the wave-wound coil parts are provided, and
a plurality of the wave-wound coil parts, the outermost coil end portion, and the innermost coil end portion form the coil unit wave-wound by a direction of winding wire being changed a plurality of times in the circumferential direction.

4. The stator according to claim 1, wherein
among the slot housed portions disposed in the slots different from each other, the first coil end portion connects a pair each of the slot housed portions disposed to be shifted outward or inward by one in the radial direction.

5. The stator according to claim 1, wherein
the slot housed portions forming one of the wave-wound coil parts and the slot housed portions forming another side, the wave-wound coil parts being connected to each other, are disposed in the slots adjacent to each other.
